Europäisches Patentamt

European Patent Office

Office européen des brevets

(19)

(11) Numéro de publication: **0 287 457**
**A1**

(12) **DEMANDE DE BREVET EUROPEEN**

(21) Numéro de dépôt: 88400882.2

(22) Date de dépôt: 13.04.88

(51) Int. Cl.⁴: **F 16 K 31/04**
**F 16 K 11/074**
**// E04H3/20**

(30) Priorité: 13.04.87 FR 8705231

(43) Date de publication de la demande:
**19.10.88 Bulletin 88/42**

(84) Etats contractants désignés:
**AT BE CH DE ES GB GR IT LI LU NL SE**

(71) Demandeur: **Cardon, Gérard**
**45 rue Jouffroy**
**F-75017 Paris (FR)**

**Becq de Fouquieres, Jean-Pierre-Raoul**
**7 Rue de la Croix de l'Orne**
**Morainville - Orgeval (Yvelines) (FR)**

(72) Inventeur: **Cardon, Gérard**
**45 rue Jouffroy**
**F-75017 Paris (FR)**

**Becq de Fouquieres, Jean-Pierre-Raoul**
**7 Rue de la Croix de l'Orne**
**Morainville - Orgeval (Yvelines) (FR)**

(74) Mandataire: **Rataboul, Michel Charles**
**CMR INTERNATIONAL 69, rue de Richelieu**
**F-75002 Paris (FR)**

(54) Dispositif pour la commande mécanique d'une ensemble prévu pour une commande manuelle.

(57) Le dispositif selon l'invention est destiné à commander par un moteur un ensemble tel qu'une vanne à distributeur (7') comportant un corps fixe (1-5) traversé par un maneton axial (8) relié au distributeur (7') et monté mobile en pivotement par rapport au corps (1-5).

Il est caractérisé en ce qu'il comprend une partie mobile centrale (20) qui est équipée d'un moteur d'entraînement (22) et qui doit être fixée amoviblement au maneton axial (8) et une partie immobile (21) qui constitue un support pour la partie mobile (20) et qui présente au moins un élément excentré (62) par rapport au maneton (7) et devant coopérer avec un élément (10) du corps fixe (5) pour que la partie immobile (21) soit bloquée en pivotement.

FIG.1

EP 0 287 457 A1

# Description

## DISPOSITIF POUR LA COMMANDE MECANIQUE D'UN ENSEMBLE PREVU POUR UNE COMMANDE MANUELLE

Il existe des mécanismes destinés à être manoeuvrés manuellement et d'autres, de la même espèce, qui sont motorisés. C'est le cas, en particulier, des vannes qui équipent les piscines et qui assurent différentes fonctions : filtration, recyclage, évacuation, etc.

Lorsqu'un usager possède un mécanisme manuel et souhaite perfectionner son installation, il est obligé de se procurer un mécanisme neuf qui est substitué au précédent, même si celui-ci est en bon état. La dépense est donc élevée et fait reculer les usagers surtout quand il s'agit de vannes car leur remplacement impose de débrancher les tuyaux de l'ancienne vanne, d'assurer l'étanchéité, puis de rebrancher les tuyaux sur la nouvelle vanne, tout cela représentant des opérations coûteuses.

La présente invention vise à satisfaire ce besoin en permettant d'accoupler un mécanisme à un ensemble manuel existant, ce qui évite tout débranchement des tuyaux quand il s'agit d'une vanne.

A cette fin, l'invention a pour objet un dispositif pour commander par un moteur un ensemble tel qu'une vanne à distributeur comportant un corps fixe traversé par un maneton axial relié au distributeur et monté mobile en pivotement par rapport au corps, caractérisé en ce qu'il comprend une partie mobile centrale qui est équipée d'un moteur d'entraînement et qui doit être fixée amoviblement au maneton axial et une partie immobile qui constitue un support pour la partie mobile et qui présente au moins un élément excentré par rapport au maneton et devant coopérer avec un élément du corps fixe pour que la partie immobile soit bloquée en pivotement.

Selon d'autres caractéristiques de l'invention :
- la partie mobile comprend une extrémité creuse devant coiffer le maneton et traversée d'un passage radial devant se placer en regard d'un passage analogue du maneton, une goupille devant être engagée dans les passages alignés pour solidariser l'extrémité creuse et le maneton;
- la partie immobile présente des montants situés à la périphérie de la partie mobile centrale et terminés chacun par un pied destiné à se loger dans une encoche que présente le corps fixe;
- le maneton étant monté mobile à la fois en pivotement autour de son axe et en translation selon son axe, la partie mobile est solidaire d'une pièce elle-même montée mobile selon ces deux mouvements et munie d'un organe destiné à transformer le mouvement circulaire du moteur d'entraînement en un mouvement linéaire axial;
- la pièce montée mobile selon ces deux mouvements est munie d'au moins une rampe circulaire par laquelle elle repose sur deux galets situés sur des branches d'un étrier relié au moteur d'entraînement;
- la pièce montée mobile selon ces deux mouvements porte un élément destiné à coopérer avec des organes de commande du moteur tels que des contacteurs disposés selon le lieu géométrique dudit élément;

- les organes de commande ont un émetteur et un récepteur de rayonnement situés de part et d'autre du parcours de l'élément, lequel constitue un masque susceptible d'occulter individuellement le rayonnement de chaque organe de commande.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique d'ensemble en perspective montrant l'application de l'invention à une vanne de piscine

La figure 2 est une vue schématique en coupe d'un ensemble conforme à l'invention à savoir, ici, une vanne de piscine et son dispositif de commande mécanique.

Les figures 3, 4 et 5 sont des vues schématiques en plan montrant plusieurs positions du dispositif de commande.

Les figures 6 et 7 sont des vues schématiques en élévation correspondant aux positions respectivement de la figure 3 et de la figure 4.

En se reportant au dessin, on voit une vanne qui comprend d'une part un corps 1 muni d'embouts 2, 3 et 4 pour le raccordement de tuyaux et contenant un distributeur pivotant qui sera décrit en détail plus loin, et d'autre part un couvercle 5 fixé au corps 1 par des vis 6 et présentant une cuvette centrale 7 dans laquelle apparaît un maneton 8 traversé d'un trou 9. La cuvette 7 présente des crans 10 sur sa périphérie et est entourée d'une plaque annulaire 11 divisée en secteurs portant différentes mentions.

A l'origine, cette vanne est munie d'une poignée qui se place dans la cuvette 7 et qui coiffe le maneton 8 dont elle est rendue solidaire au moyen d'une goupille qui traverse une partie de la poignée et qui se loge dans le trou 9.

La vanne a pour but de diriger un flux d'entrée vers au moins une sortie et, à cet effet, le corps 1 contient un distributeur pivotant solidaire du maneton 8. En faisant pivoter la poignée, on entraîne le distributeur qui modifie les directions du flux, en relation avec les mentions de la plaque 11, en faisant communiquer deux compartiments différents déterminés par des cloisons du corps 1. L'usager peut, ainsi, obtenir plusieurs fonctions en manoeuvrant la poignée et donc le distributeur intérieur. Mais pour assurer l'étanchéité entre le distributeur et les cloisons, le distributeur est appliqué en permanence contre le sommet de celles-ci avec interposition d'un joint souple. Il faut donc, avant de faire pivoter le distributeur, soulever ce dernier afin d'éviter l'usure du joint. Le maneton 8 solidaire du distributeur est monté mobile en translation et il est soulevé quand on exerce sur la poignée un effort de levier.

En outre, afin d'être sûr que le distributeur est en position correcte, la poignée comporte un bec qui doit se placer dans celui des crans 10 qui correspond aux mentions correctes de la plaque 11.

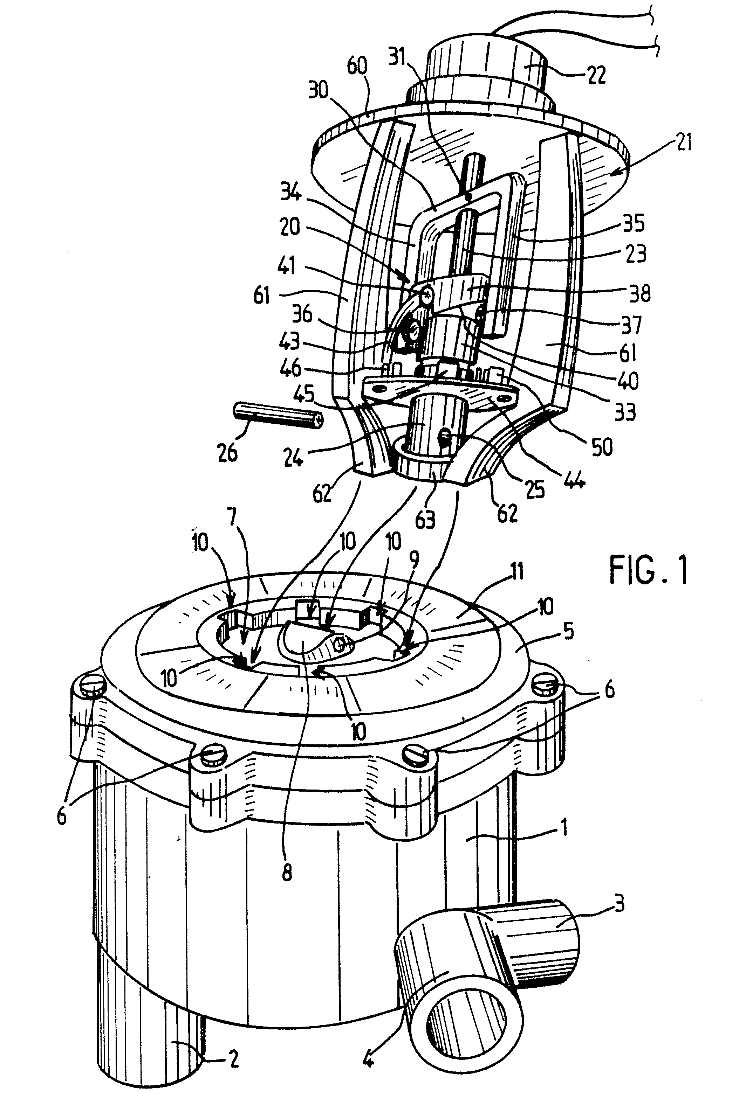

Selon l'invention, on retire la poignée d'origine et la vanne se présente alors comme sur la figure 1. On substitue à la poignée un dispositif mécanique que l'on va décrire maintenant.

Le dispositif comprend une partie mobile centrale 20 et une partie immobile 21 servant de support fixe.

La partie mobile 20 est composée d'un motoréducteur électrique 22, d'un arbre rotatif 23, et d'une extrémité creuse 24 devant coiffer le maneton 8 et présentant un passage transversal 25 pour une goupille 26 destinée à être engagée à la fois dans le passage 25 et dans le trou 9, afin de rendre solidaires l'extrémité 24 et le maneton 8.

Entre l'arbre 23 et l'extrémité 24, se trouvent des organes assurant les différentes fonctions voulues : soulèvement du maneton 8, pivotement sélectif de ce dernier et retour à son niveau d'origine.

L'arbre 23 est fixé à un étrier 30 par une vis radiale 31 et s'étend ensuite dans un trou axial 32 d'une pièce 33 dont l'extrémité 24 fait partie, ce trou 32 assurant le guidage de la pièce 33 et permettant un déplacement axial relatif entre cette dernière et l'axe 23.

Chacune des deux branches 34 et 35 de l'étrier 30 porte un galet librement rotatif respectivement 36 et 37 composé d'un roulement à billes et dont les axes sont alignés.

La pièce 33 porte, à l'opposé de l'extrémité 24, une couronne 38 dont le diamètre est inférieur à l'écartement des branches 34 et 35 de l'étrier 30 et supérieur à la distance qui sépare les galets 36 et 37 afin qu'elle puisse reposer sur ceux-ci.

La face inférieure de la couronne 38 présente deux rampes 40 symétriques et intéressant chacune la moitié environ de la circonférence. Sa périphérie porte deux butées diamétralement opposées 41 et 42 dont la saillie est suffisante pour qu'elles soient rencontrées par les branches 34 et 35 de l'étrier 30 quand celui-ci est entraîné en rotation. La couronne 38 porte aussi un doigt 43 dont l'extrémité libre se trouve au-dessus d'un disque fixe 44 sur lequel sont disposés selon un cercle des contacteurs 45, 46, 47, 48, 49 et 50 susceptibles d'être commandés par le doigt 43, comme on le décrira plus loin.

La partie fixe 21, comprend un support 60 pour le moto-réducteur 22 et des montants extérieurs 61 qui reçoivent le disque fixe 44 et qui se terminent par des pieds 62 fixés à l'extérieur d'une couronne 63.

Le fonctionnement du dispositif qui vient d'être décrit est le suivant :

Après avoir retiré la poignée d'origine, on prend le dispositif et on le place sur la vanne de telle sorte que la couronne 63 se place dans la cuvette 7 et les pieds 62 des montants 61 chacun dans un cran 10. Ce faisant, l'extrémité 24 coiffe automatiquement le maneton 8 et on engage la goupille 26 dans le passage 25 et le trou 9.

On remarque, d'ores et déjà, que le dispositif est en place et fixé. En effet, il est relié à la vanne par la goupille 26 qui assure son immobilisation dans le sens axial du moto-réducteur 22 et il est empêché de tourner par les pieds 62 qui constituent des éléments excentrés bloqués par les crans 10.

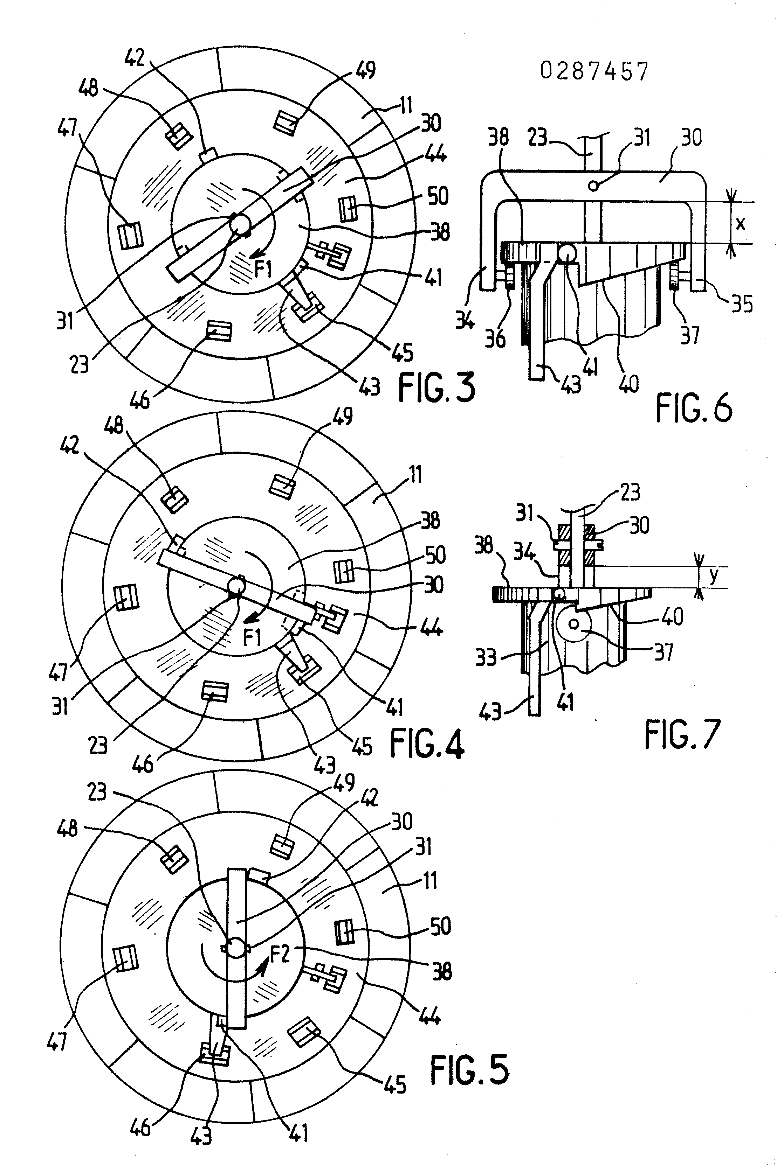

En mettant en route le moto-réducteur 22, on provoque la rotation de l'arbre 23 qui entraîne à son tour l'étrier 30 selon la flèche FI (figures 3 et 6). Les branches 34 et 35 se déplacent circulairement tout en restant dans le même plan et les galets 36 et 37, dont l'axe est solidaire des branches, roulent contre les rampes 40, ce qui a pour effet de soulever la couronne 38 perpendiculairement à son plan. La pièce 33 et l'extrémité 24 se soulèvent donc aussi et, par traction sur la goupille 26, ce mouvement est transmis au maneton 8. Ce soulèvement fait passer de $\underline{x}$ à $\underline{y}$ la valeur de l'espace mesuré entre la face inférieure de l'étrier 30 et la face supérieure de la couronne 38 (figures 6 et 7). La différence entre $\underline{y}$ et $\underline{x}$ est égale à la hauteur des rampes 40.

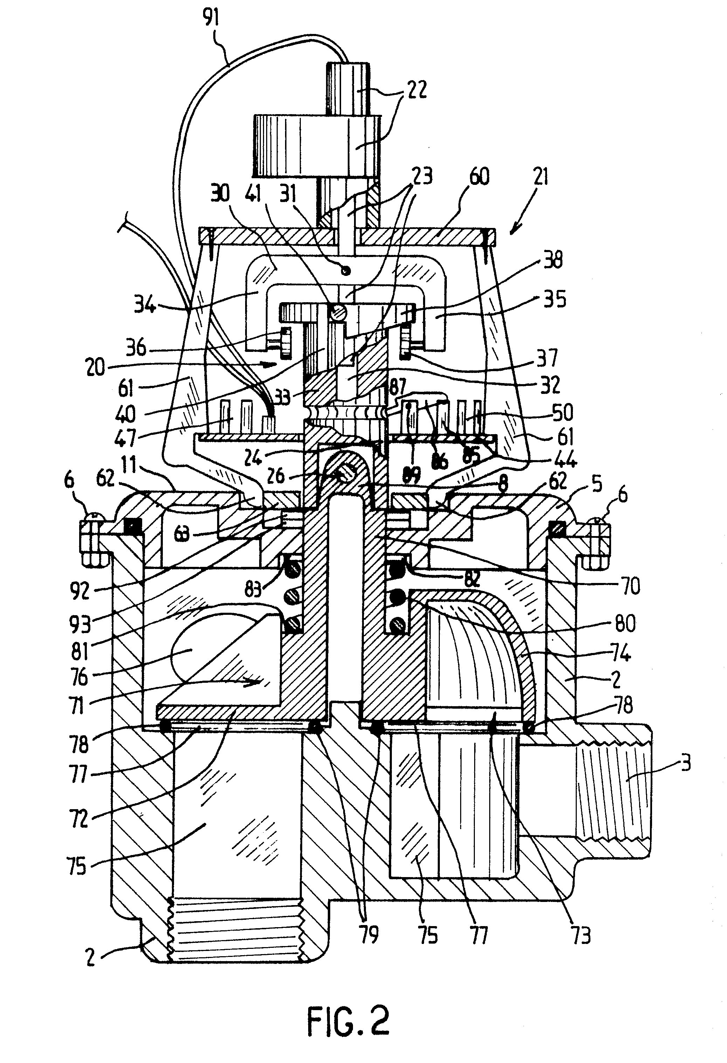

Sur la figure 2 on voit que le maneton 8 est obtenue en une seule pièce avec un moyeu central 70 d'un distributeur 71 qui comprend un disque plein 72 traversé d'un passage 73 en regard d'une cloche 74. Le corps 2 de la vanne comprend plusieurs cloisons radiales 75 qui déterminent des compartiments dans chacun desquels débouche un passage d'eau 2, 3, 4, etc. correspondant à une entrée ou une sortie d'eau. Le passage 73 permet de faire communiquer sélectivement chacun de ces compartiments avec un ou plusieurs embouts 76. Il faut assurer l'étanchéité entre le distributeur 71 et le sommet des cloisons 75. Pour cela, on prévoit un joint souple 77 sur chaque cloison, 78 à la périphérie et 79 autour du moyeu. Le disque plein 72 est appliqué en permanence contre ces joints au moyen d'un ressort 80 intercalé entre un épaulement 81 du distributeur 71 et une rondelle 82 placée contre une partie centrale interne 83 du couvercle 5.

Quand les galets 36 et 37 provoquent le soulèvement de l'embout 8, le disque plein 72 est écarté des joints 77-78-79 et le ressort 80 est comprimé.

Les butées 41 et 42 sont situées à des emplacements précis, coordonnés avec les points les plus saillants des rampes 40, afin que les branches 34 et 35 de l'étrier 30 les rencontrent au moment où le maneton 8 est en position d'écartement maximum, ce qui correspond au plus grand éloignement possible du disque plein 72 et des joints 77-78-79.

Dès que les branches 34 et 35 recontrent ces butées 41 et 42, celles-ci sont poussées et entraînent la couronne 38 en rotation (figure 4), laquelle ne faisant qu'un avec la pièce 33 et l'extrémité 24, provoque le pivotement du maneton 8 et du distributeur 71.

Le doigt 43 qui tourne avec la couronne 38 quitte sa position de coopération avec le contacteur 45 et rencontre le contacteur 46. Celui-ci provoque alors auotmatiquement l'arrêt du moto-réducteur 22 puis sa mise en route en sens inverse, selon la flèche F2 de la figure 5, jusqu'au retour de l'étrier 30 et du doigt 43 à leur position d'origine. Pendant le retour de l'étrier, la pièce 33 s'abaisse sous l'effet du ressort 80 qui se détend en tirant sur la goupille 26 et des galets 36 et 37 qui roulent sur les rampes 40 et suppriment leur effet d'écartement.

Ainsi, on obtient automatiquement le soulèvement du distributeur 71, son pivotement et son abaissement dans sa nouvelle position.

Selon la fonction assurée par le distributeur 71, celui-ci doit rester dans une position donnée plus ou moins longtemps et il est avantageux de prévoir une temporisation grâce à laquelle on obtient une automatisation de la vanne. On peut même prévoir un programme qui assure de manière totalement automatique le fonctionnement de la vanne, avec possibilité de retour à un fonctionnement mécanique mais non automatique, par exemple.

Afin de garantir un fonctionnement sûr, il est bon de prévoir que l'installation est automatiquement mise dans une situation de sécurité en cas d'incident. Les deux incidents majeurs qui peuvent se produire sont la mise en route d'une pompe de mise en mouvement de l'eau à un moment inopportun et l'arrêt intempestif du moto-réducteur 22, notamment par interruption du courant électrique : grève, panne etc.

Pour parer au premier danger, on place sur le disque 44 un interrupteur 85 qui est sensible à une palette 86 dont un bec 87 est engagé dans une gorge 88 de la pièce 33 et qui est motée pivotante sur un axe 89. De la sorte, le bec 87 est élevé et abaissé en, même temps que la pièce 33 monte et descend.

Quand le bec 87 est en position haute, cela signifie que le distributeur 71 est soulevé et qu'il n'y a plus d'étanchéité entre les différents compartiments de la vanne. Il est alors impératif que la pompe ne puisse en aucun cas être mise en route, et la palette 86 agit sur l'interrupteur 85 pour que le moteur de la pompe ne puisse pas être mis en route. L'interrupteur 85 agit donc comme un coupe-circuit qui condamne le fonctionnement de la pompe.

Quand le bec 87 est en position basse, cela signifie que le distributeur 71 est abaissé et qu'il y a isolement étanche des compartiments. La pompe peut à ce moment (et à ce moment seulement) être mise en route, ce qui peut être obtenu de manière automatique dès que la palette 86 a repris sa position primitive.

Pour éviter tout incident en cas d'arrêt accidentel du moto-réducteur, on prévoit une batterie d'accumulateur (non représentée qui est constamment maintenue en charge quand la situation est normale et qui est associée à un contacteur programmé (non représenté) qui commande automatiquement la fermeture de l'embout (2, 3, 4 etc.) correspondant à l'évacuation, en positionnant si nécessaire le distributeur 71 : mise en marche du moto-réducteur selon le programme nécessaire compte tenu de la position du distributeur 71 à l'instant de la panne : soulèvement, pivotement et abaissement. On évite ainsi une vidange accidentelle de la piscine soit par effet d'écoulement naturel si la vanne est à un niveau supérieur à celui de l'égoût d'évacuation des eaux usées, soit par effet de siphon.

Quand on pévoit une automatisation poussée, la programmation et les différentes commandes peuvent être groupées dans un coffret (non représenté) dont la réalisation est évidemment à la portée de l'homme de métier.

Etant donné que les organes électriques essentiels pour le fonctionnement du dispositif sont placés sur le disque 44, celui-ci peut être constitué par une plaque de circuit électronique pour posséder tous les circuits éventuel lement imprimés, et composants voulus.

Les contacteurs 45 à 50 sont de tout type voulu mais il est avantageux de les choisir du type connu ayant un émetteur et un récepteur de rayonnement, notamment infrarouge. Le doigt 43 joue alors le rôle d'un masque qui, lors du déplacement de la couronne 38, coupe le faisceau et occulte celui-ci. Cela peut avoir pour effet, soit de fermer un circuit, soit de l'ouvrir. Des conducteurs (schématisés par un fil 90) relient le coffret de programmation et le disque 44 pour qu'un courant soit absent ou présent, selon les cas, aux différents contacteurs. Selon le programme, le doigt 43 s'arrête ou pas à chaque contacteur et provoque la mise en route du moto-réducteur 22 dans une sens, dans l'autre ou son arrêt grâce à une liaison électrique schématisée par un fil 91 qui relie le disque 44 et le motoréducteur 22.

Le dispositif selon l'invention est particulièrement précis car chaque contacteur 45 à 50 est placé à l'aplomb des secteurs de la plaque 11 et leur fixation est facilement obtenue car la position correcte du passage 73 du distributeur 71 par rapport aux cloisons 75 n'exige pas une précision extrême.

Le repérage est très simple car il suffit de déterminer la position d'un montant par rapport au couvercle 5.

Le dispositif selon l'invention peut convenir pour différents types de vannes existantes et son adaptation parfaite peut nécessiter simplement la présence ou l'absence d'une ou plusieurs cales d'épaisseur 92-93 (figure 2).

**Revendications**

1- Dispositif pour commander par un moteur un ensemble tel qu'une vanne multi-voies à distributeur (71) comportant un corps fixe (1-5) traversé par un maneton axial (7) relié au distributeur (71) et monté mobile en pivotement par rapport au corps (1-5), caractérisé en ce qu'il comprend une partie mobile centrale (20) qui est équipée d'un moteur d'entraînement (22) et qui doit être fixée amoviblement au maneton axial (7) et une partie immobile (21) qui constitue un support pour la partie mobile (20) et qui présente au moins un élément excentré (62) par rapport au maneton (7) et devant coopérer avec un élément (10) du corps fixe (5) pour que la partie immobile (21) soit bloquée en pivotement.

2- Dispositif selon la revendication 1, caractérisé en ce que la partie mobile (20) comprend une extrémité creuse (24) devant coiffer le maneton (7) et traversée d'un passage radial (25) devant se placer en regard d'un passage analogue (9) du maneton (7), une goupille (26) devant être engagée dans les passages (25 et 9) alignés pour solidariser l'extrémité creuse (24) et le maneton (7).

3- Dispositif selon la revendication 1, caractérisé en ce que la partie immobile (21) présente des montants (61) situés à la périphérie de la partie mobile centrale (20) et terminés chacun par un pied (62) destiné à se loger dans un cran (10) que présente le corps fixe (5).

4- Dispositif selon la revendication 1, caractérisé en ce que le maneton (7) étant monté mobile à la fois en pivotement autour de son axe et en translation selon son axe, la partie mobile (20) est solidaire d'une pièce (33) elle-même montée mobile selon ces deux mouvements et munie d'au moins un organe (38-40) destiné à transformer le mouvement circulaire du moteur d'entraînement (22) en un mouvement linéaire axial.

5- Dispositif selon la revendication 4, caractérisé en ce que la pièce (33) montée mobile selon ces deux mouvements est munie d'au moins une rampe circulaire (40) par laquelle elle repose sur deux galets (36 et 37) situés sur des branches (34 et 35) d'un étrier (30) relié au moteur d'entraînement (22).

6- Dispositif selon la revendication 4, caractérisé en ce que la pièce (33) montée mobile selon ces deux mouvements porte un élément (43) destiné à coopérer avec des organes de commande tels que des contacteurs (45-50) disposés selon le lieu géométrique dudit élément (43).

7- Dispositif selon la revendication 6, caractérisé en ce que les organes de commande (45-50) ont un émetteur et un récepteur de rayonnement situés de part et d'autre du parcours de l'élément (43), lequel constitue un masque susceptible d'occulter individuellement le rayonnement de chaque organe de commande (45-50).

0287457

FIG. 1

0287457

FIG.2

0287457

FIG.3

FIG.6

FIG.4

FIG.7

FIG.5

Office européen
des brevets

**RAPPORT DE RECHERCHE EUROPEENNE**

Numero de la demande

EP 88 40 0882

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | MIDAS: "Mehrwege-Ventile 11/2"+2" aus Kunststoff", "Midamatic 994, Ventil-Automatik für 11/2"+2" Midas-Ventile"<br>--- | 1,2,4 | F 16 K 31/04<br>F 16 K 11/074//<br>E 04 H 3/20 |
| A | US-A-2 777 515 (STIRLING)<br>* En entier *<br>--- | 1,4-6 | |
| A | US-A-3 640 310 (ERLICH)<br>--- | | |
| A | US-A-2 871 883 (DUNLAP)<br>--- | | |
| A | US-A-3 633 623 (PERRY)<br>----- | | |

**DOMAINES TECHNIQUES RECHERCHES (Int. Cl.4)**

F 16 K
E 04 H

Le présent rapport a été établi pour toutes les revendications

| Lieu de la recherche | Date d'achèvement de la recherche | Examinateur |
|---|---|---|
| LA HAYE | 10-06-1988 | VERELST P.E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................................
& : membre de la même famille, document correspondant

EPO FORM 1503 03.82 (P0402)